# FASCICULE DE BREVET EUROPEEN

(11) **EP 1 540 020 B1**
(45) Date de publication et mention de la délivrance du brevet: **23.10.2013**
(21) Numéro de dépôt: 03758285.5
(22) Date de dépôt: 27.08.2003
(51) Int. Cl.: C13B 20/16, C13K 13/00, B01D 61/02, A23L 2/74, A23C 9/142, A23C 9/146, A23C 9/144

(54) **PROCEDE DE PRE PARATION DE SUCRE CRISTALLISE A PARTIR D'UNE SOLUTION AQUEUSE SUCRE E CONTENANT DES ANIONS ET DES CATIONS MONOVALENTS ET POLYVALENTS**
VERFAHREN ZUR TRENNUNG VON KRISTALLISIERTEM ZUCKER AUS EINER SÜSSEN WÄSSRIGEN LÖSUNG ENTHALTEND EINWERTIGEN UND MEHRWERTIGEN ANIONEN UND KATIONEN
METHOD OF PREPARING GRANULATED SUGAR FROM AN AQUEOUS SUGAR SOLUTION CONTAINING MONOVALENT AND POLYVALENT ANIONS AND CATIONS

(30) Priorité: 06.09.2002 FR 0211042
(43) Date de publication de la demande: 15.06.2005
(73) Titulaire: APPLEXION, 78680 Epone (FR)
(72) Inventeur: THEOLEYRE, Marc-André, F-75020 Paris (FR)
(74) Mandataire: Pochart, François
(86) Numéro de dépôt international: PCT/FR2003/002593
(87) Numéro de publication internationale: WO 2004/022788

(56) Documents cités:
- WO-A-99/04903
- US-A- 5 254 174
- US-A- 5 443 650
- US-A- 5 932 106
- US-B1- 6 383 540
- DATABASE WPI Week 198835 Derwent Publications Ltd., London, GB; AN 1988-245629 XP002244671 & JP 63 177800 A (ITOCHU SEITO KK) 21 juillet 1988 (1988-07-21)

## Description

La présente invention a pour objet un procédé de préparation de sucre cristallisé à partir d'une solution aqueuse contenant un ou plusieurs sucres, des cations polyvalents, des cations métalliques monovalents, des anions monovalents et des anions polyvalents minéraux et/ou des anions d'acides organiques, avec purification préalable de cette solution aqueuse par nanofiltration.

La purification par déminéralisation de produits liquides (tels qu'un sirop de glucose, des jus sucrés ou du lactosérum) au moyen de résines échangeuses d'ions est connue depuis de nombreuses années.

Le principe d'une telle déminéralisation est de faire percoler un tel produit liquide à travers une résine cationique et une résine anionique, le contre-ion de la première étant l'ion H⁺ et le contre-ion de la seconde l'ion OH⁻.

En passant sur la résine cationique, les cations du produit liquide sont échangés avec les ions H⁺ de la résine et en passant sur la résine anionique, les anions du produit sont échangés avec les ions OH⁻ de cette résine, les ions H⁺ et OH- ainsi libérés desdites résines s'associant pour donner de l'eau.

La régénération des résines ainsi utilisées est réalisée par passage d'un acide sur la résine cationique et d'une base sur la résine anionique et selon les rendements de régénération, les effluents de régénération peuvent contenir jusqu'à 2 à 3 fois la charge minérale extraite du produit liquide traité.

De tels effluents fortement salins constituent indiscutablement une source de nuisance.

En résumé, la déminéralisation de liquides contenant des minéraux au moyen de résines échangeuses d'ions impose l'utilisation d'un acide et d'une base pour leur régénération. Outre le coût de ces produits chimiques, cette opération de déminéralisation produit des effluents salins polluants et dont le traitement est onéreux.

Par ailleurs, la technique de nanofiltration est couramment utlisée comme moyen de pré-concentration de solutions aqueuses contenant des minéraux. Les ions monovalents de ces minéraux traversent la membrane de nanofiltration et se retrouvent donc pour l'essentiel dans le perméat, tandis que leurs ions polyvalents sont retenus par cette membrane et se retrouvent, pour l'essentiel, concentrés dans le rétentat ; on obtient ainsi un effet de purification par déminéralisation qui reste cependant insuffisant.

Le brevet US-A-6,383,540 concerne le domaine de l'industrie laitière et décrit plus particulièrement sur un procédé pour purification le petit-lait de certains sels inorganiques. Le procédé comprend une étape de substitution des cations et anions divalents sur une résine échangeuse d'ions, mais ne comprend aucune étape de cristallisation. Le brevet US-A-6,383,540 décrit notamment un procédé de purification d'un lactosérum qui n'a pas été soumis à une étape d'ultrafiltration. Rien ne permet de savoir si le produit issu du traitement selon ce procédé serait adapté à une cristallisation efficace du rétentat final.

La demande internationale WO-A-99/04903 concerne de façon générale le domaine de l'industrie alimentaire, et plus particulièrement un procédé de séparation et purification des nutriments d'intérêt de solutions alimentaires parmi lesquels, des hydrocarbonates, vitamines, protéines... Cette demande internationale ne décrit cependant pas de procédé comprenant une étape de substitution dans laquelle les cations et anions divalents sont substitués par des cations et anions monovalents isolables dans l'étape de nanofiltration. La demande WO-A-99/04903 ne considère qu'une solution comprenant des cations et n'évoque jamais la substitution des anions polyvalents présents dans la solution.

Le but de la présente invention est la mise au point d'un procédé de préparation de sucre cristallisé comprenant une purification préalable économe en énergie et en produits chimiques et limitant la quantité et le nombre d'effluents produits.

L'idée à la base de ce procédé réside dans la modification de la composition ionique, sans déminéralisation, de la solution aqueuse à traiter afin d'améliorer l'effet de déminéralisation d'une nanofiltration, mise en oeuvre sur la solution aqueuse ainsi modifiée.

Ainsi, la présente invention concerne un procédé de préparation de sucre cristallisé à partir d'une solution aqueuse contenant un ou plusieurs sucres, des cations polyvalents, des cations métalliques monovalents, des anions monovalents et des anions polyvalents minéraux et/ou des anions d'acides organiques, tels que lactate et citrate, caractérisé en ce qu'il comprend les opérations :
(a) de substitution d'une partie au moins desdits cations polyvalents et desdits anions polyvalents minéraux et anions d'acides organiques respectivement par des cations métalliques monovalents et des anions monovalents pour obtenir une solution aqueuse appauvrie en cations polyvalents et/ou en anions polyvalents minéraux et anions d'acides organiques et contenant lesdits cations métalliques monovalents et lesdits anions monovalents, et
(b) de nanofiltration de la solution résultant de l'opération (a) pour obtenir en tant que rétentat, un jus sucré aqueux (8) enrichi en sucres, en cations polyvalents et en anions polyvalents minéraux et anions d'acides organiques et en tant que perméat, un effluent aqueux (7) contenant l'essentiel des anions et cations métalliques monovalents,
(c) de cristallisation d'une partie au moins du rétentat résultant de l'opération (b), pour obtenir du sucre cristallisé et des eaux-mères enrichies en anions et cations métalliques monovalents.

L'opération (a) ci-dessus livre une solution aqueuse enrichie en anions et/ou en cations métalliques monovalents et fortement appauvrie en cations polyvalents et en anions polyvalents minéraux et/ou anions d'acides organiques.

Au cours de l'opération (b), les sucres de la solution aqueuse issue de l'opération (a) se retrouvent dans le rétentat dans lequel se retrouvent également principalement les cations polyvalents et les anions polyvalents minéraux et/ou les anions d'acides organiques, restants. Quant aux ions monovalents, ils se retrouvent pour l'essentiel dans le perméat.

Il est à noter que grâce à l'opération (a) préalable, qui ne constitue pas en soi une opération de déminéralisation, on augmente dans la solution aqueuse la proportion des ions monovalents par rapport aux ions polyvalents et anions d'acides organiques ce qui entraîne une augmentation du taux de déminéralisation de ladite solution aqueuse au cours de l'opération (b).

Lorsque l'on cherche à éliminer de préférence les cations polyvalents présents dans la solution aqueuse à purifier, dans l'opération (a) la substitution des cations polyvalents est avantageusement effectuée simultanément à la substitution des anions polyvalents minéraux et/ou anions d'acides organiques ou encore plus avantageusement effectuée sur la solution aqueuse ayant préalablement subi la substitution des anions polyvalents minéraux et/ou anions d'acides organiques.

Par ailleurs, lorsque l'on cherche à éliminer de préférence les anions polyvalents minéraux et/ou anions d'acides organiques présents dans la solution aqueuse à purifier, dans l'opération (a) la substitution des anions polyvalents minéraux et/ou anions d'acides organiques est avantageusement effectuée simultanément à la substitution des cations polyvalents ou encore plus avantageusement effectuée sur la solution aqueuse ayant préalablement subi la substitution des cations polyvalents.

Selon un mode de réalisation préférée de l'invention, l'opération (a) de substitution comprend le traitement de la solution aqueuse avec une résine cationique dont le contre-ion est un cation métallique monovalent et/ou avec une résine anionique dont le contre-ion est un anion monovalent.

Par ailleurs, le cation métallique monovalent formant le contre-ion de la résine cationique et l'anion monovalent constituant le contre-ion de la résine anionique sont de préférence de même nature que respectivement lesdits cations métalliques monovalents et lesdits anions monovalents présents dans la solution aqueuse de départ; ceci évite l'introduction dans le processus d'ions étrangers et rend plus avantageux, comme on le verra ci-après, les opérations de régénération des résines cationique et anionique susmentionnées.

Selon une caractéristique importante du procédé de la présente invention, ce procédé comprend de préférence également une opération:
(d) de régénération de la résine cationique et/ou anionique, notamment par traitement de celle(s)-ci par du perméat obtenu lors de l'opération (b) de nanofiltration ci-dessus, ce perméat étant préalablement concentré au degré souhaité.

En procédant de la sorte, on fait utilisation, pour la régénération, des ions monovalents initialement présents dans la solution aqueuse à purifier ; ceci évite la mise en oeuvre de produits chimiques coûteux extérieurs au procédé et limite la production d'effluents source de nuisance.

Selon diverses variantes, le procédé selon l'invention peut en outre comprendre une ou plusieurs des opérations suivantes :
(e) chromatographie d'une partie au moins des eaux-mères produites par l'opération (c) de cristallisation, pour obtenir un effluent enrichi en sucre et un raffinat enrichi en anions et cations métalliques monovalents ;
(f) chromatographie d'une partie du rétentat résultant de l'opération (b), pour obtenir un effluent enrichi en sucre et un raffinat enrichi en anions et cations métalliques monovalents ; et
(g) traitement du perméat résultant de l'opération (b), par osmose inverse ou électrodialyse pour produire de l'eau et une fraction aqueuse enrichie en anions et cations métalliques monovalents.

On notera que selon une autre caractéristique du procédé de la présente invention, la résine cationique et/ou la résine anionique peuvent être régénérées par traitement de celle(s)-ci avec au moins l'un des liquides suivants, éventuellement concentrés, combinés à une partie du perméat obtenu lors de l'opération (b) : eaux-mères obtenues lors de l'opération (c), raffinat obtenu lors de l'opération (e), raffinat obtenu lors de l'opération (f), fraction aqueuse obtenue lors de l'opération (g).

Le procédé selon l'invention peut en particulier être utilisé pour la purification d'un lactosérum, d'un perméat résultant de l'ultrafiltration d'un lactosérum ou d'un jus sucré de betterave, de canne à sucre, de chicorée ou de topinambour, ce lactosérum, perméat ou jus comprenant des ions Ca²⁺ et Mg²⁺, des anions Cl⁻, des cations Na⁺ et K⁺ et des anions choisis essentiellement dans le groupe constitué par les anions phosphate et sulfate, les anions issus d'acides organiques et leurs mélanges.

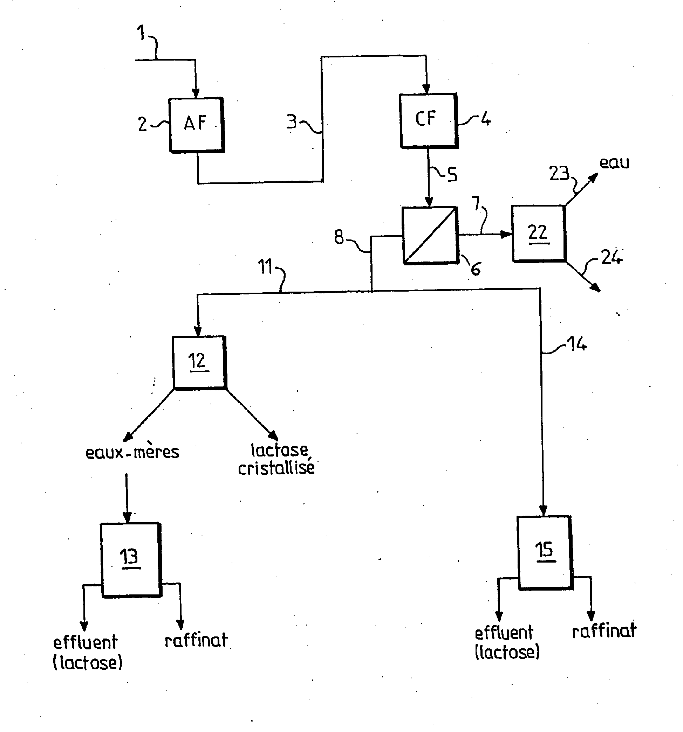

La présente invention est illustrée ci-après, de manière non limitative, par la description d'un exemple de purification, faite en référence à la figure unique qui est la représentation schématique d'une installation pour la mise en oeuvre du procédé selon l'invention.

La solution aqueuse soumise à ce procédé est dans l'exemple choisi, un perméat obtenu par ultrafiltration d'un lactosérum. Un tel perméat comprend pour l'essentiel du lactose, des acides organiques et des minéraux (en particulier des cations, Na⁺, K⁺, Ca²⁺, Mg²⁺, des anions Cl⁻ et phosphate et des anions d'acides organiques, tels que citrate et lactate).

Ce perméat est amené par un conduit 1 à l'entrée d'une colonne 2 garnie d'une résine anionique forte (AF), puis de la sortie de cette colonne 2 par un conduit 3 à l'entrée d'une colonne 4 garnie d'une résine cationique forte (CF).

La résine cationique forte est sous la forme Na⁺ ou K⁺, c'est-à-dire que son contre-ion est l'ion Na⁺ ou K⁺ ; la résine anionique forte est sous la forme Cl⁻, c'est-à-dire que son contre-ion est l'ion Cl⁻.

On notera qu'en variante, ces deux résines pourraient être utilisées en mélange, auquel cas une seule colonne serait suffisante.

Lors du passage du perméat sur la résine anionique, il échange ses anions polyvalents minéraux (phosphate) et anions d'acides organiques (lactate, citrate) avec les ions Cl⁻ de la résine ; lors de son passage sur la résine cationique, il échange ses cations polyvalents (Ca²⁺, Mg²⁺) avec les ions Na⁺ ou K⁺ de la résine.

Le perméat se trouve ainsi débarrassé d'une partie substantielle de ses cations et anions polyvalents minéraux et de ses anions d'acides organiques, lesquels cations et anions ont été remplacés par des cations et anions monovalents ; ce perméat contient donc pour l'essentiel du lactose, des ions Na⁺, K⁺ et Cl⁻, des cations Ca²⁺, Mg²⁺ résiduels, des anions phosphate résiduels et des anions d'acides organiques résiduels.

La solution aqueuse issue de la colonne 4 est ensuite amenée par un conduit 5 dans un appareil de nanofiltration 6 comportant une ou des membranes de nanofiltration perméables aux ions monovalents mais retenant le lactose, les ions polyvalents et les ions d'acides organiques.

Ainsi, sont issus de l'appareil 6 :
- d'une part, par le conduit 7 un perméat enrichi en ions Cl⁻, Na⁺ et K⁺, et
- d'autre part, par le conduit 8 un rétentat enrichi en lactose et en anions phosphate, anions issus d'acides organiques et cations Ca²⁺ et Mg²⁺, résiduels ; ce rétentat contient en outre, une faible quantité d'ions Na⁺, K⁺ et Cl⁻.

Par ailleurs, une partie du rétentat de nanofiltration est soumise à une cristallisation. A cet effet, une dérivation 11 est prévue sur le conduit 8, cette dérivation 11 aboutissant dans une unité de cristallisation 12 où est produit du lactose cristallisé et des eaux-mères contenant la plupart des minéraux (notamment Na⁺, K⁺ et Cl⁻).

Si on le souhaite, une partie au moins de ces eaux-mères peuvent être soumises à une chromatographie dans une colonne de chromatographie 13 pour obtenir d'une part, un effluent enrichi en lactose et un raffinat enrichi en minéraux (essentiellement Na⁺, K⁺ et Cl⁻).

En outre, une autre partie du rétentat de nanofiltration peut être soumis à une chromatographie. A cet effet, une seconde dérivation 14 est prévue sur le conduit 8, cette dérivation aboutissant à l'entrée d'une colonne de chromatographie 15. On extrait de cette dernière, d'une part un effluent enrichi en lactose et d'autre part un raffinat enrichi en minéraux (essentiellement Na⁺, K⁺ et Cl⁻).

On ajoutera que le perméat de nanofiltration évacué par le conduit 7 peut être traité dans une unité d'osmose inverse 22 pour obtenir d'une part de l'eau extrait par le conduit 23 et d'autre part, une fraction aqueuse (évacuée par le conduit 24) concentrée en ions Na⁺, K⁺ et Cl⁻.

Comme cela ressort de ce qui précède, on dispose de toute une gamme de liquides produits au cours du procédé et avantageusement utilisables, éventuellement après concentration, pour la régénération de la résine cationique forte et la résine anionique forte garnissant les colonnes 2 et 4.

Il s'agit :
- d'une fraction du perméat de nanofiltration évacuée par le conduit 7,
- de la fraction aqueuse saline évacuée de l'unité d'osmose inverse par le conduit 24,
- d'une fraction du rétentat de nanofiltration,
- des eaux-mères issue de l'unité de cristallisation 12,
- des raffinats issus des unités de chromatographie 13 et 15.

On précisera que selon la teneur en cations et anions monovalents Na⁺, K⁺ et Cl⁻ de ces différents liquides utilisables pour la régénération des résines des colonnes 2 et 4, cette régénération pourra être effectuée soit en série, soit en parallèle.

On notera cependant que la régénération en parallèle est particulièrement préférée car elle évite tout risque de précipitation de sels insolubles tels que le phosphate de calcium, sur la résine cationique forte présente dans la colonne 4.

Cependant, la régénération en série des deux résines est possible sous réserve de contrôler le pH pour éviter tout risque de précipitation dans les résines.

Par ailleurs, le tableau ci-après montre l'influence du type de décalcification préalable à la nanofiltration, sur la performance de cette nanofiltration, le liquide traité étant un perméat résultant l'ultrafiltration d'un lactosérum (dénommé perméat de lactosérum dans ce tableau), le facteur de concentration de la nanofiltration étant de 4 et la membrane de nanofiltration étant du type DESAL 5 de la société américaine OSMONICS.

**Tableau**

| | Perméat de lactosérum | Rétentat de nanofiltration | | |
|---|---|---|---|---|
| | | Témoin | CF | AF puis CF |
| matière sèche (g/l) | 50,0 | 187 | 187 | 187 |
| cations totaux (éq./kg de matière sèche) | 1,7 | 1,22 | 1,14 | 0,90 |
| taux de réduction globale des cations (%) | | 28 | 33 | 47 |

| | | | | |
|---|---|---|---|---|
| Témoin : absence totale de décalcification avant la nanofiltration. CF: décalcification par passage sur une résine cationique forte (SR1 LNA de la société américaine Rohm and Haas). AF puis CF: décalcification par passage en série sur une résine anionique forte (IRA 458 de la société américaine Rohm and Haas) puis sur une résine cationique forte. | | | | |

Les données contenues dans ce tableau montre que le taux de réduction globable des cations est augmenté lorsque utilisation est faite du système CF seul et particulièrement augmenté lorsque utilisation est faite du système AF-CF ; ce tableau montre donc la forte influence sur les performances de la nanofiltration d'une réduction préalable de la teneur en cations polyvalents, en anions polyvalents minéraux et en anions d'acides organiques aptes à former des complexes avec lesdits cations polyvalents.

## Revendications

1. Procédé de préparation de sucre cristallisé à partir d'un perméat résultant de l'ultrafiltration d'un lactosérum ou d'un jus sucré de betterave, de canne à sucre, de chicorée ou de topinambour (1) contenant un ou plusieurs sucres, des cations polyvalents, des cations métalliques monovalents, des anions monovalents et des anions polyvalents minéraux et/ou des anions d'acides organiques, ce perméat ou jus comprenant des ions Ca2+ et Mg2+, des anions Cl-, des cations Na+ et K+ et des anions choisis essentiellement dans le groupe constitué par les anions phosphate et sulfate, les anions issus d'acides organiques et leurs mélanges, **caractérisé en ce qu'**il comprend les opérations :
(a) de substitution d'une partie au moins desdits cations polyvalents et desdits anions polyvalents minéraux et anions d'acides organiques respectivement par des cations métalliques monovalents et des anions monovalents, pour obtenir une solution aqueuse appauvrie en cations polyvalents et en anions polyvalents minéraux et anions d'acides organiques et contenant lesdits cations métalliques monovalents et anions monovalents,
(b) de nanofiltration de la solution résultant de l'opération (a) pour obtenir en tant que rétentat, un jus sucré aqueux (8) enrichi en sucres, en cations polyvalents et en anions polyvalents minéraux et anions d'acides organiques et en tant que perméat, un effluent aqueux (7) enrichi en anions et cations métalliques monovalents, et
(c) de cristallisation d'une partie au moins du rétentat résultant de l'opération (b), pour obtenir du sucre cristallisé et des eaux-mères enrichies en anions et cations métalliques monovalents.

2. Procédé selon la revendication 1, **caractérisé en ce que** l'opération de substitution des cations polyvalents est effectuée simultanément à l'opération de substitution des anions polyvalents minéraux et/ou anions d'acides organiques ou effectuée sur la solution aqueuse ayant subi préalablement l'opération de substitution des anions polyvalents minéraux et/ou anions d'acides organiques.

3. Procédé selon la revendication 1, **caractérisé en ce que** l'opération de substitution des anions polyvalents minéraux et/ou anions d'acides organiques est effectuée simultanément à l'opération de substitution des cations polyvalents ou effectuée sur la solution aqueuse ayant prealablement subi l'opération de substitution des cations polyvalents.

4. Procédé selon la revendication 1, 2 ou 3, **caractérisé en ce que** l'opération (a) de substitution comprend le traitement de la solution aqueuse avec une résine cationique dont le contre-ion est un cation métallique monovalent et/ou avec une résine anionique dont le contre-ion est un anion monovalent.

5. Procédé selon la revendication 4, **caractérisé en ce que** le cation metallique monovalent formant le contre-ion de la résine cationique et l'anion monovalent constituant le contre-ion de la résine anionique sont de même nature que respectivement lesdits cations métalliques monovalents et lesdits anions monovalents présents dans la solution aqueuse de départ.

6. Procédé selon la revendication 4 ou 5, **caractérisé en ce qu'**il comprend en outre une opération:
(d) de régénération de la résine cationique et/ou de la résine anionique.

7. Procédé selon la revendication 6, **caractérisé en ce que** l'opération (d) de régénération comprend le traitement de la résine cationique et/ou de la résine anionique avec du perméat (7) obtenu lors de l'opération (b) de nanofiltration, après concentration de celui-ci au degré souhaité.

8. Procédé selon l'une des revendications 1-7, **caractérisé en ce qu'**il comprend en outre l'opération
(e) de chromatographie d'une partie au moins des eaux-mères (12) produites par l'opération (c) de cristallisation, pour obtenir un effluent (D) enrichi en sucre et un raffinat (E) enrichi en anions et cations métalliques monovalents.

9. Procédé selon l'une quelconque des revendications 1 à 8, **caractérisé en ce qu'**il comprend en outre l'opération :
(f) de chromatographie d'une partie du retentat (14) resultant de l'opération (b), pour obtenir un effluent (D) enrichi en sucre et un raffinat (E) enrichi en anions et cations métalliques monovalents.

10. Procédé selon l'une quelconque des revendications 1 à 9, **caractérisé en ce qu'**il comprend en outre l'opération :
(g) de traitement du perméat (7) resultant de l'opération (b), par osmose inverse ou electrodialyse pour produire de l'eau (A) et une fraction aqueuse (24) enrichie en anions et cations métalliques monovalents.

11. Procédé selon l'une quelconque des revendications 6 a 10, **caracterise en ce qu'**il comprend l'operation :
de régénération de la résine cationique et/ou de la résine anionique par traitement de celle(s)-ci avec au moins l'un des liquides suivants, eventuellement concentrés, combinés à une partie du perméat (7) obtenu lors de l'opération (b) : eaux-mères (B) obtenues lors de l'opération (c), raffinat (E) obtenu lors de l'opération (e), raffinat (E) obtenu lors de l'opération (f), fraction aqueuse (24) obtenue lors de l'opération (g).

## Patentansprüche

1. Verfahren zur Herstellung kristallisierten Zuckers aus einem Permeat, das bei der Ultrafiltration einer Molke oder eines zuckerhaltigen Saftes der Rübe, des Zuckerrohrs, der Zichorie oder des Topinambur (1) gewonnen wird, welche(r) eine oder mehrere Zuckerarten, mehrwertige Kationen, einwertige Metallkationen, einwertige Anionen und mehrwertige mineralische Anionen und/oder Anionen organischer Säuren enthält, wobei dieses Permeat oder dieser Saft Ionen des Typs Ca2+ und Mg2+, Anionen des Typs Cl-, Kationen des Typs Na+ und K+ sowie Anionen umfasst, die aus der Gruppe ausgewählt sind, die aus den Phosphat- und Sulfatanionen, der Anionen organischer Säuren sowie deren Mischungen besteht, **dadurch gekennzeichnet, dass** es die folgenden Vorgänge umfasst:
(a) Ersetzen mindestens eines Teils der mehrwertigen Kationen und der mehrwertigen mineralischen Anionen und Anionen organischer Säuren durch einwertige Metallkationen beziehungsweise einwertige Anionen, um eine wässrige Lösung zu erhalten, welche an mehrwertigen Kationen und an mehrwertigen mineralischen Anionen und Anionen organischer Säuren abgereichert ist und welche die einwertigen Metallkationen und einwertigen Anionen enthält,
(b) Nanofiltrieren der Lösung, die beim Vorgang (a) erhalten wurde, um als Retentat einen wässrigen zuckerhaltigen Saft (8), der an Zuckerarten, mehrwertigen Kationen und mehrwertigen mineralischen Anionen und Anionen organischer Säuren angereichert ist, und als Permeat einen wässrigen Stoffstrom (7) zu erhalten, der an einwertigen Anionen und Metallkationen angereichert ist, zu erhalten, und
(c) Kristallisieren mindestens eines Teils des Retentats, das beim Vorgang (b) erhalten wurde, um kristallisierten Zucker erhalten sowie Mutterlaugen, die an einwertigen Anionen und Metallkationen angereichert sind.

2. Verfahren nach Anspruch 1, **dadurch gekennzeichnet, dass** der Vorgang des Ersetzen der mehrwertigen Kationen gleichzeitig mit dem Vorgang des Ersetzens mehrwertiger mineralischer Anionen und/oder Anionen organischer Säuren durchgeführt wird oder an der wässrigen Lösung vorgenommen wird, die zuvor dem Vorgang des Ersetzens der mehrwertigen mineralischen Anionen und/oder Anionen organischer Säuren unterzogen wurde.

3. Verfahren nach Anspruch 1, **dadurch gekennzeichnet, dass** der Vorgang des Ersetzens der mehrwertigen mineralischen Anionen und/oder Anionen organischer Säuren gleichzeitig mit dem Vorgang des Ersetzens der mehrwertigen Kationen durchgeführt wird oder an der wässrigen Lösung vorgenommen wird, die zuvor dem Vorgang des Ersetzens der mehrwertigen Kationen unterzogen wurde.

4. Verfahren nach Anspruch 1, 2 oder 3, **dadurch gekennzeichnet, dass** der Vorgang (a) des Ersetzens die Behandlung der wässrigen Lösung mit einem kationischen Harz, dessen Gegenion ein einwertiges Metallkation ist, und/oder mit einem anionischen Harz, dessen Gegenion ein einwertiges Anion ist, umfasst.

5. Verfahren nach Anspruch 4, **dadurch gekennzeichnet, dass** das einwertige Metallkation, welches das Gegenion des kationischen Harzes bildet, und das einwertige Anion, welches das Gegenion des anionischen Harzes bildet, von der gleichen Beschaffenheit wie die einwertigen Metallkationen beziehungsweise die einwertigen Anionen sind, die in der wässrigen Ausgangslösung vorliegen.

6. Verfahren nach Anspruch 4 oder 5, **dadurch gekennzeichnet, dass** es darüber hinaus einen Vorgang der folgenden Art umfasst:
(d) Regenerieren des kationischen Harzes und/oder des anionischen Harzes.

7. Verfahren nach Anspruch 6, **dadurch gekennzeichnet, dass** der Vorgang (d) der Regenerierung die Behandlung des kationischen Harzes und/oder des anionischen Harzes mit dem Permeat (7) umfasst, welches beim Nanofiltrationsvorgang (b) erhalten wird, nachdem dieses im gewünschten Maße aufkonzentriert wurde.

8. Verfahren nach einem der Ansprüche 1 bis 7, **dadurch gekennzeichnet, dass** es darüber hinaus den folgenden Vorgang umfasst:
(e) Chromatographie mindestens eines Teils der Mutterlaugen (12), die beim Kristallisationsvorgang (c) anfallen, um einen Stoffstrom (D), der an Zucker angereichert ist, und ein Raffinat (E), das an einwertigen Anionen und Metallkationen angereichert ist, zu erhalten.

9. Verfahren nach einem beliebigen der Ansprüche 1 und 8, **dadurch gekennzeichnet, dass** es darüber hinaus den folgenden Vorgang umfasst:
(f) Chromatographie mindestens eines Teils des Retentats (14), das beim Vorgang (b) anfällt, um einen Stoffstrom (D), der an Zucker angereichert ist, und ein Raffinat (E), das an einwertigen Anionen und Metallkationen angereichert ist, zu erhalten.

10. Verfahren nach einem der Ansprüche 1 bis 9, **dadurch gekennzeichnet, dass** es darüber hinaus den folgenden Vorgang umfasst:
(g) Behandeln des Permeats (7), das beim Vorgang (b) anfällt, mittels Umkehrosmose oder Elektrodialyse, um Wasser (A) und eine wässrige Fraktion (24), die an einwertigen Anionen und Metallkationen angereichert ist, zu erhalten.

11. Verfahren nach einem beliebigen der Ansprüche 6 bis 10, **dadurch gekennzeichnet, dass** es den folgenden Vorgang umfasst:
Regenerieren des kationischen Harzes und/oder des anionischen Harzes, indem diese(s) mit mindestens einer der folgenden Flüssigkeiten behandelt wird/werden, welche möglicherweise aufkonzentriert wurden und welche mit einem Teil des Permeats (7) kombiniert wurden, das beim Vorgang (b) erhalten wurde: Mutterlaugen (B), die beim Vorgang (c) erhalten wurden, Raffinat (E), das beim Vorgang (e) erhalten wurde, Raffinat (E), das beim Vorgang (f) erhalten wurde, wässrige Fraktion (24), die beim Vorgang (g) erhalten wurde.

## Claims

1. A method of preparing granulated sugar from a permeate resulting from ultrafiltration of a whey or sugar beet juice, sugar cane, chicory or Jerusalem artichoke (1) containing one or more sugars, polyvalent cations, monovalent metal cations, monovalent anions and polyvalent mineral anions and/or organic acid anions, this permeate or juice comprising Ca2+ and Mg2+ ions, Cl-anions, Na+ and K+ cations and anions essentially chosen from the group formed by phosphate and sulphate anions, anions derived from organic acids and mixtures thereof, **characterized in that** it comprises the operations of:
(a) substituting at least part of said polyvalent cations and said polyvalent mineral anions and organic acid anions by monovalent metal cations and monovalent anions respectively, to obtain an aqueous solution depleted of polyvalent cations, of polyvalent mineral anions and organic acid anions and containing said monovalent metal cations and said monovalent anions;
b) nanofiltering the solution resulting from operation (a) to obtain as retentate an aqueous sweet juice (8) enriched with sugars, with polyvalent cations, with polyvalent mineral anions and organic acid anions, and as permeate an aqueous effluent (7) enriched with monovalent anions and monovalent metal cations; and
c) crystallising at least part of the retentate resulting from operation (b), to obtain granulated sugar and mother liquors enriched with monovalent anions and monovalent metal cations.

2. The method according to claim 1, **characterized in that** the operation to substitute the polyvalent cations is conducted simultaneously with the operation to substitute the polyvalent mineral anions and/or organic acid anions, or performed on the aqueous solution previously subjected to the substitution operation of the polyvalent mineral anions and/or organic acid anions.

3. The method according to claim 1, **characterized in that** the operation to substitute the polyvalent mineral anions and/or organic acid anions is conducted simultaneously with the operation to substitute the polyvalent cations, or performed on the aqueous solution previously subjected to the substitution operation of the polyvalent cations.

4. The method according to claim 1, 2 or 3 **characterized in that** the substitution operation (a) comprises the treatment of the aqueous solution with a cationic resin whose counter-ion is a monovalent metal cation and/or with an anionic resin whose counter-ion is a monovalent anion.

5. The method according to claim 4, **characterized in that** the monovalent metal cation forming the counter-ion of the cationic resin and the monovalent anion forming the counter-ion of the anionic resin are of the same type as said monovalent metal cations and said monovalent anions respectively present in the starting aqueous solution.

6. The method according to claim 4 or 5 **characterized in that** it further comprises an operation of:
(d) regenerating the cationic resin and/or anionic resin.

7. The method according to claim 6, **characterized in that** the regeneration operation (d) comprises the treatment of the cationic resin and/or of the anionic resin with permeate (7) obtained during the nanofiltration operation (b) after concentration thereof to the desired degree.

8. The method according to one of claims 1-7, **characterized in that** it further comprises the operation of:
(e) chromatography of at least part of the mother liquors (12) produced by the crystallisation operation (c) to obtain an effluent (D) enriched with sugar and a raffinate (E) enriched with monovalent anions and monovalent metal cations.

9. The method according to any of claims 1 to 8 **characterized in that** it further comprises the operation of:
(f) chromatography of part of the retentate (14) resulting from operation (b) to obtain an effluent (D) enriched with sugar and a raffinate (E) enriched with monovalent anions and monovalent metal cations.

10. The method according to any of claims 1 to 9, **characterized in that** it further comprises the operation of:
(g) treating the permeate (7) resulting from operation (b) with reverse osmosis or electrodialysis to produce water (A) and an aqueous fraction (24) enriched with monovalent anions and monovalent metal cations.

11. The method according to any of claims 6 to 10, **characterized in that** it comprises the operation of:
regenerating the cationic resin and/or anionic resin by treating these with at least one of the following optionally concentrated liquids combined with part of the permeate (7) obtained at operation (b): mother liquors (B) obtained at operation (c), raffinate (E) obtained at operation (e), raffinate (E) obtained at operation (f), aqueous fraction (24) obtained at operation (g).
